# EUROPÄISCHE PATENTSCHRIFT

(11) **EP 0 471 244 B1**
(45) Veröffentlichungstag und Bekanntmachung des Hinweises auf die Patenterteilung: **04.06.1997**
(21) Anmeldenummer: 91112933.6
(22) Anmeldetag: 01.08.1991
(51) Int. Cl.: G05D 23/13

(54) **Vorrichtung zur Regelung und Bedienung einer Mischwasserbereitungsanlage**
Control device and operation of a mixing water installation
Dispositif de contrôle et de commande d'une installation mélangeuse d'eau

(30) Priorität: 17.08.1990 DE 4026110
(43) Veröffentlichungstag der Anmeldung: 19.02.1992
(73) Patentinhaber: FRIEDRICH GROHE AKTIENGESELLSCHAFT, D-58675 Hemer (DE)
(72) Erfinder: Eichholz, Heinz-Dieter, Dr., W-5860 Iserlohn (DE); Ludewig, Hans-Jürgen, W-3260 Rinteln (DE)

(56) Entgegenhaltungen:
- EP-A- 0 195 271
- EP-A- 0 313 913
- EP-A- 0 345 785
- EP-A- 0 375 259
- DE-A- 3 528 050
- GB-A- 2 174 510
- US-A- 4 682 728
- US-A- 4 854 498
- US-A- 4 931 938

## Beschreibung

Die Erfindung betrifft eine Vorrichtung zur Regelung und Bedienung einer Mischwasserbereitungsanlage mit Kalt- und Warmwasserzuflüssen sowie einem Mischwasserabfluß und wenigstens einem vor der Mischkammer angeordneten Regelventil, in dem ein Ventilschieber vorgesehen ist, mit dem die Zuflüsse von Kalt- und Warmwasser gegenläufig von einem als mechanischer Proportionalregler arbeitenden Dehnstoffelement gesteuert werden und dem eine elektronische Regeleinrichtung zugeordnet ist.
Eine derartige Einrichtung ist aus der Druckschrift DE-C-36 43 519 bekannt.
Ferner ist es bekannt (DE-A-36 00 383, US-A-48 54 496), die Mischwassertemperaturregelung mit Hilfe eines Mikroprozessors durchzuführen und zusätzlich ein Sicherheitssystem zur Überwachung kritischer Parameter vorzusehen.

Der Erfindung liegt die Aufgabe zugrunde, die bekannte Einrichtung zu verbessern, insbesondere die Vorrichtung so auszubilden, daß ein vielseitiger Einsatz mit vor Ort wählbaren Funktionsbedingungen sowie eine einfache und sichere Bedienung bei kostengünstiger Herstellung möglich ist.
Diese Aufgabe wird erfindungsgemäß mit den Merkmalen des Anspruchs 1 gelöst.

Weitere Ausgestaltungen der Erfindung sind in den Ansprüchen 2 bis 18 angegeben.

Die mit der Erfindung erzielbaren Vorteile bestehen insbesondere darin, daß es bei der vorgeschlagenen Einrichtung nur von der jeweils implementierten Rechenvorschrift abhängig ist, ob die Regeleinheit zur Unterstützung eines in seiner Regelcharakteristik einfach gestalteten Reglers in Form eines Dehnstoffelements oder Bimetallscheiben etc. eingesetzt wird. Mit der erfindungsgemäßen Regeleinheit können aus ungeregelten Stellgliedern, wie z. B. Ventilen, bei entsprechender Adaption geregelte Baueinheiten erstellt werden, genausogut aber auch einfach geartete Regeleinheiten in ihrer Funktionalität, eingeschlossen der Sicherheitsfunktionen, und in ihrem Regelverhalten verbessert werden. Die Realisation einer digital arbeitenden Regeleinheit mit der hieraus resultierenden Trennung von Hardware und Software erzielt eine Flexibilität, mit der jetzigen und zukünftigen Anforderungen voll Rechnung getragen werden kann.
Wird ein gesockeltes EPROM als Hardwarebestandteil genutzt, so kann durch Erstellung einer neuen Rechenvorschrift (Software) und Ablegen dieser Software in einem neuen EPROM einfach durch Austausch dieses EPROM's bei ansonsten unveränderter Hardware der Regler für ganz anders geartete Aufgaben benutzt werden.

Zweckmäßig verfügt der Mikroprozessor selbst über ein überschreibbares EPROM (EEPROM). Hiermit läßt sich vorzugsweise der zu beherrschende und jeweils auf den speziellen Anwendungsfall angepaßte, im EPROM austauschbar abgelegte Regelalgorithmus selbst durch eine Vielzahl über unterschiedliche Zugriffsberechtigungen von für den jeweiligen berechtigten Benutzer direkt mittels geeigneter Software verfügbar gemachten Regelparametern variabel gestalten, um unterschiedlichsten Betriebsbedingungen gerecht werden zu können. D.h. eine komplexe Regelstrategie wird zerlegt in einzelne, überschaubare, jeweils durch kennzeichnende Parameter einstellbare Unteralgorithmen.
Der Einsatz eines Mikroprozessors ermöglicht daneben die einfache Unterstützung einer geräteinternen, seriellen oder parallelen Schnittstelle, über die eine Anbindung der erf erfindungsgemäßen Vorrichtung an Systeme der Fernwirktechnik über spezielle Bussysteme erreicht werden kann, ebenso, wie die Verwaltung eines geräteinternen Schaltkontaktes zur Auslösung von Funktionen zusätzlich betriebener, elektrisch arbeitender Geräte.

Die erfindungsgemäße Vorrichtung wird vorzugsweise über eine an einer Schalttafel ausgebildeten Tastatur, z.B. Folientastatur, mit verschiedenen Drucktasten, die zusätzliche Signalelemente, wie z.B. Leuchtdioden, enthalten können, mit einem mehrstelligen Display (LCD, LED) bedient. Über diese Elemente können Betriebszustände gewählt, Reglerparameter abgerufen und verändert werden, sowie Meßgrößen angezeigt werden.
Darüber hinaus kann durch den Mikroprozessor eine Eigendiagnostik und bei entsprechender Gestaltung der Software ein Vorrichtungsicherheitssystem verwaltet werden, das Fehler oder Warnungen über das Display zur Anzeige bringt und gleichzeitig vorhandene Sicherheits baugruppen geeignet ansteuert.
Zur Erhöhung der Betriebssicherheit bei der erfindungsgemäßen Vorrichtung ist eine Akkupufferung zweckmäßig, die im Falle eines Netzspannungsausfalls ein reglerinternes Sicherheitssystem aktivieren kann.

Vorzugsweise kann die mikroprozessorbetriebene Vorrichtung zur Verbesserung des Regelverhaltens bestehender thermostatischer, mit mechanischem Proportionalregler arbeitender Mischbatterien großer Nennweite für Duschanlagen etc. eingesetzt werden. Bei diesem Einsatz der erfindungsgemäßen Vorrichtung ist ein Sicherheitssystem erforderlich, das z.B. für den Fall eines Kaltwasserausfalls dafür sorgt, daß keine Wasserentnahmetemperaturen auftreten, die zu einer Verbrühung der menschlichen Haut führen können.
Über eine Akkupufferung kann auch bei einem Netzspannungsabfall oder -ausfall als Reaktion die Verstellung des Ventils in Richtung einer Absperrung des Warmwasserzuflusses unmittelbar eingeleitet werden. Außerdem kann ein Steuersignal erzeugt werden, welches ein vorzusehendes Magnetventil im Mischwasserausfluß oder Warmwasserzulauf schließt.

Ein Ausführungsbeispiel der Erfindung ist in der Zeichnung dargestellt und wird im folgenden näher beschrieben. Es zeigt
- Figur 1: eine Regel- und Bedienvorrichtung einer Mischwasserbereitungsanlage in Ansicht;
- Figur 2: die Schalt- oder Bedienungstafel der Vorrichtung gemäß Figur 1 in vergrößerter Darstellung.

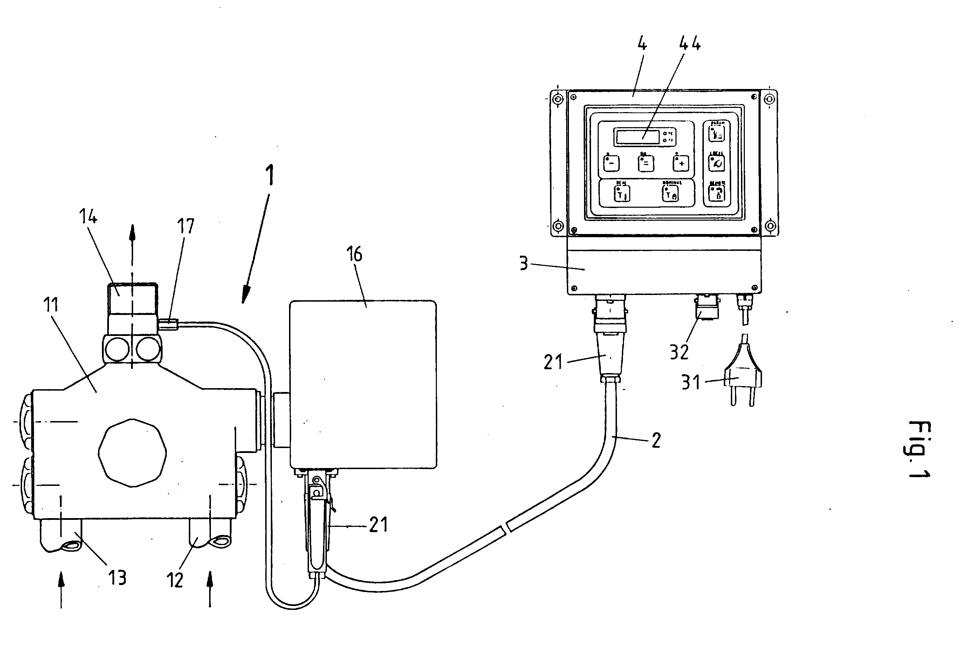

Die in Figur 1 gezeigte Vorrichtung besteht aus einem Regelventil 1, einer Datenleitung 2, einer Steuer- und Recheneinheit (CPU) 3 sowie einer Schalttafel 4 mit einem Display (LCD) 44.
Das Regelventil 1 wird von einem Ventilgehäuse 11 mit einem Kaltwasseranschluß 12, einem Warmwasseranschluß 13 und einem Mischwasseranschluß 14 sowie einem Stellglied 16 und einem Temperaturfühler 17 gebildet. In dem Ventilgehäuse 11 ist ein in der Zeichnung nicht dargestellter Ventilschieber vorgesehen, mit dem die Zuflüsse von Kalt- und Warmwasser gegenläufig von einem als mechanischer Proportionalregler arbeitenden Dehnstoffelements, wie es beispielsweise aus der Druckschrift DE 36 43 519 C2 bekannt ist, gesteuert werden. Das Stellglied 16 ist hierbei mit einer Schraubspindel in das Ventilgehäuse 11 eingeführt und mit dem Dehnstoffelement verbunden, wobei die Schraubspindel von einem Stellmotor in dem Stellglied 16 relativ zum Ventilgehäuse 11 bewegbar ist. Im Bereich des Mischwasseranschlusses 14 ist außerdem ein Temperaturfühler 17 am Ventilgehäuse 11 ausgebildet.
Die Verbindung zwischen dem Regelventil 1 und der Steuer- und Recheneinheit (CPU) 3 wird durch die Datenleitung 2 hergestellt, wobei die Datenleitung 2 mit Stecker 21 einerseits an das Stellglied 16 und andererseits an die Steuer- und Recheneinheit (CPU) 3 ankuppelbar ist. Die Signalleitung vom Temperaturfühler 17 ist hierbei in das Stellglied 16 eingeführt, derart, daß mit einem Stecker 21 auch die Signale des Temperaturfühlers 17 der Steuer-und Recheneinheit (CPU) 3 zugeführt werden können.
Unabhängig von der Installation des Regelventils 1 kann über die Datenleitung 2 die Steuer- und Recheneinheit (CPU) 3 mit der Schalttafel 4 an einem beliebigen, für die Handhabung der Schalttafel 4 günstigen Ort installiert werden. Die Schalttafel 4 ist in Figur 1 dabei unmittelbar am Gehäuse der Steuer- und Recheneinheit (CPU) 3 ausgebildet. Außerdem ist an der Steuer- und Recheneinheit (CPU) 3 eine Fernsteuerungssteckdose 32 für eine Fernbedienung der Regelvorrichtung vorgesehen und ein Netzstecker 31 ausgebildet, mit dem die Stomversorgung der Regeleinrichtung sichergestellt werden kann.
Die Regelung der Mischwassertemperatur geschieht in folgender Weise:
Die Mischwassertemperatur wird von dem Temperaturfühler 17 erfaßt und dem Rechenwerk (CPU) 3 über die Datenleitung 2 zugeführt. Durch einen Vergleich des ermittelten Meßwertes mit dem zuvor an der Schalttafel 4 bestimmten Sollwertes, wird über die Rechenvorschrift (Software), die die Besonderheiten des hier aufgeführten Regelvorgangs beinhaltet und berücksichtigt und die zuvor über die Schalttafel 4 auf die hier z.B. vorliegenden sorgungsbedingungen angepaßt ist, ein Ansteuersignal für einen elektromotorischen Stellantrieb, wie Schrittmotor mit Untersetzungsgetriebe, im Stellglied 16 hergeleitet. Über diesen Stellantrieb wird dann rotatorisch die im Ventilgehäuse 11 gehalterte Schraub- oder Stellspindel des mechanischen Sollwertgebers für das Dehnstoffelement betätigt und damit im Sinne einer Sollwertnachführung die Ventilschieberstellung im Regelventil 1 geeignet verändert, z.B. zur Beseitigung der bei einem Proportionalregler bei Änderung der sorgungsbedingungen, wie z.B. Versorgungsdruckabfall KW, unvermeidbar bleibenden Regelabweichung.

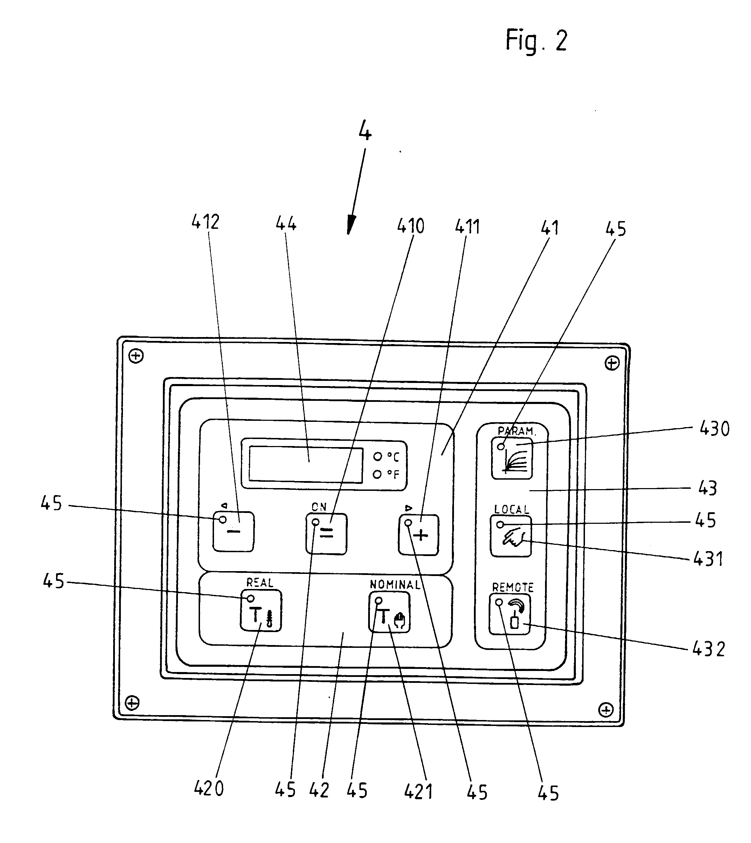

Die Steuer- und Recheneinheit (CPU) 3 besteht im wesentlichen aus einem Single-Chip-Mikroprozessor mit externem Datenspeicher (RAM) und externem umfangreichen Programmspeicher (EPROM). Eine oder mehrere physikalische Größen, wie Temperatur, Durchfluß, PH-Wert usw., können über entsprechende Sensoren erfaßt werden und nach einer Umwandlung der von den Sensoren abgegebenen Signale in prozessorspezifische digitale Form dem Single-Chip-Mikroprozessor zugeführt werden, wo ein Vergleich zu einer oder mehreren wählbaren Führungsgrößen vorgenommen wird und hieraus die Regelabweichungen ermittelt werden, aus denen über die jeweilige Rechenvorschrift, die in Softwareform im Programmspeicher abgelegt ist und vom Umfang her nur durch den zur Verfügung stehenden externen Programmspeicher beschränkt ist, Ansteuersignale für einen elektromotorisch betriebene Stelleinheit (Schrittmotor) abgeleitet werden. Mit der Stelleinheit wird dann eine von der benutzten Getriebeart abhängige translatorische oder rotatorische Stellgröße ausgeführt als Ausgangsgröße der Regeleinrichtung und gleichzeitig Eingangsgröße in die Regelstrecke.
Zur Bedienung der Regelvorrichtung ist, z.B. in Figur 1, am Gehäuse der Recheneinheit (CPU) 3 selbst die Schalttafel 4, Figur 2, ausgebildet. An der Schalttafel 4 sind drei Tastenblöcke 41,42,43 angeordnet. Im ersten Tastenblock 41 ist im oberen Bereich das Display (LED / LCD) 44 zur Anzeige von Soll- und Istwerttemperaturen, Parameterwerten, Fehlermeldungen etc. vorgesehen. Unterhalb des Displays ist an der rechten Seite eine PLUS-Eingabetaste 411 und im linken Bereich eine MINUS-Eingabetaste 412 angeordnet. Zwischen den beiden Tasten 411 und 412 ist eine Einschalt- und Speichertaste 410 auf gleicher Höhe angeordnet. Im zweiten Tastenblock 42 ist auf der linken Seite eine REAL-Funktionstaste 420 und auf der rechten Seite eine NOMINAL-Funktionstaste 421 angeordnet. Parallel neben den beiden übereinander angeordneten Tastenblöcken 41,42 ist im dritten Tastenblock 43 eine PARAMETER-Funktionstaste 430, eine LOCAL-Funktionstaste 431 und eine REMOTE-Funktionstaste 432 angeordnet. Außerdem ist in allen Betätigungstasten eine Leuchtdiode 45 angeordnet, die nach Aktivierung der entsprechenden Taste leuchtet.
Mit Hilfe dieser acht Tasten 410,411,412,420,421,430, 431,432 und dem Display 44 lassen sich alle Bedienprozeduren in einfacher und sicherer Weise vollziehen, wie es nachstehend im einzelnen aufgeführt ist.
Zum Einschalten der Regeleinrichtung ist die Einschalt- und Speichertaste 410 zu betätigen. Wenn die erforderliche Versorgungsspannung vorliegt und die Selbsttestfunktionen des Mikroprozessors erfolgreich abgeschlossen worden sind, leuchtet die Leuchtdiode 45 in der Taste auf. Außerdem leuchtet die Leuchtdiode 45 bei der Stellbewegung am Regelventil 1 in Richtung auf die Verringerung der Mischtemperatur in der MINUS-Eingabetaste 412, in Richtung auf Erhöhung der Mischtemperatur in der PLUS-Eingabetaste 411. Wird dagegen ein Fehlerfall erkannt, so werden gleichzeitig die Leuchtdioden 45 in der PLUS-Eingabetaste 411 und MINUS-Eingabetaste 412 aktiviert und blinken. Zusätzlich wird eine Fehlernummer, die Aufschluß über die fehlerhafte Hardwarekomponente liefert, im Wechsel mit der Isttemperatur auf dem Display 44 angezeigt. Wird dagegen keine Fehlfunktion erkannt, so kann hierauf durch Betätigung der REAL-Funktionstaste 420 die Regelvorrichtung in die Betriebsart "REAL" überführt werden, d.h. der Regelvorgang läuft ab und die zugehörige Leuchtdiode leuchtet, wobei das Display 44 die aktuelle Isttemperatur anzeigt. Tritt im Betrieb eine Fehlerfunktion auf, so wird diese, wie oben erläutert, angezeigt und gleichzeitig wird eine Sicherheitsroutine aktiviert.
Wird dagegen die NOMINAL-Funktionstaste 421 betätigt, so geht die Regelvorrichtung in den Eingabemodus "NOMINAL" und die aktuelle Sollwerttemperatur wird vom Display 44 gezeigt, wobei eine schrittweise Änderung mit der PLUS-Eingabetaste 411 und der MINUS-Eingabetaste 412 möglich ist. Hierbei kann eine obere Temperatur, die über einen anderen Parameter wählbar eingestellt werden kann, als Grenzwert bei der Speicherung nicht überschritten werden, obwohl der gewählte Zahlenwert vor der Speicherung diesen Grenzwert als Anzeige im Display überschreiten kann. Nach dem Abschluß der Änderung der Sollwerttemperatur wird durch eine Betätigung der Einschalt- und Speichertaste 410 die angezeigte Sollwerttemperatur gespeichert und die Regelvorrichtung kehrt automatisch wieder in die Betriebsart "REAL" zurück.
Die Tasten in dem dritten Tastenblock 43 können wie auch die NOMINAL-Taste über eine Codierung gegen unberechtigten Zugriff gesichert werden.
Nach Aktivierung der PARAMETER-Funktionstaste 430 tritt die Regelvorrichtung in den Eingabemodus "PARAMETER" ein, so daß hierauf die PARAMETER-Nummern vom Display 44 angezeigt werden, wobei durch Betätigung der PLUS-Eingabetaste 411 oder MINUS-Eingabetaste 412 eine Auswahl aus den Parametern vorgenommen werden kann. Nach Abschluß der Auswahl kann durch Betätigung der Einschalt- und Speichertaste 410 der entsprechende Parameterwert auf dem Display angezeigt werden, der mit Hilfe der PLUS- oder MINUS-Eingabetasten 411,412 schrittweise veränderbar ist. Eine erneute Betätigung der Speichertaste 410 beendet und speichert den eingegebenen Parameterwert. Hierauf können weitere Parameter geändert werden. Wird die REAL-Funktionstaste 420 betätigt, so wird die Funktionseingabe beendet und die Regelvorrichtung befindet sich wieder in der Betriebsart "REAL". Mit der ferner angeordneten LOCAL-Funktionstaste und REMOTE-Funktionstaste 431,432 kann eine Umschaltung von Local- auf Fernsteuerbetrieb erreicht werden. Wird die LOCAL-Funktionstaste 431 betätigt, so können alle im vorliegenden Zugriffberechtigungszustand erreichbaren Tasten der Schalttafel 4 wirksam betätigt werden. Wird dagegen die REMOTE-Funktionstaste 432 betätigt, so nimmt die Regelvorrichtung die Betriebsart "FERNSTEUERUNG" ein. An der Schalttafel 4 kann nunmehr lediglich die Isttemperatur oder durch Betätigung der "NOMINAL-Funktionstaste 421 die Solltemperatur angezeigt werden. In diesem Fall ist für die Bedienung die Fernsteuerung an der Fernsteuerungssteckdose 32 der Steuer- und Recheneinheit (CPU) 3 anzuschließen.

## Patentansprüche

1. Vorrichtung zur Regelung und Bedienung einer Mischwasserbereitungsanlage mit Kalt- und Warmwasserzuflüssen (12, 13) sowie einem Mischwasserabfluß (14) und wenigstens einem vor der Mischkammer angeordneten Regelventil (1), in dem ein Ventilschieber vorgesehen ist, mit dem die Zuflüsse von Kalt- und Warmwasser gegenläufig von einem als mechanischer Proportionalregler arbeitenden Dehnstoffelement gesteuert werden, und dem eine elektronische Regeleinrichtung zugeordnet ist, dadurch gekennzeichnet, daß als elektronische Regeleinrichtung eine digital arbeitende Steuer- und Recheneinheit (CPU) (3) vorgesehen ist, die über Datenleitungen (2) mit dem Regelventil (1) und einer Schalttafel (4) mit einem Display (44) verbunden ist, wobei
- ein leicht auswechselbarer Programmspeicher vorgesehen ist, in dem in Softwareform Rechenvorschriften für die Steuer- und Recheneinheit (CPU) (3) abgelegt sind, die auf einen jeweils vorliegenden Anwendungsfall spezialisiert sind,
- ein Sicherheitssystem vorgesehen ist, mit dem verhindert wird, daß bei einem Ausfall der Kaltwasserversorgung Wasserentnahmetemperaturen auftreten, die zu einer Verbrühung der menschlichen Haut führen.

2. Vorrichtung nach Anspruch 1, dadurch gekennzeichnet, daß die Steuer- und Recheneinheit (CPU) (3) als Single-Chip-Mikroprozessor mit externem Datenspeicher (RAM) und externem umfangreichen Programmspeicher (EPROM) ausgebildet ist, wobei eine oder mehrere physikalische Größen über einen oder mehrere Sensoren erfaßbar sind, deren Signale - gewandelt in prozessorspezifische, digitale Formen - dem Mikroprozessor zugeführt werden.

3. Vorrichtung nach Anspruch 1 oder 2, dadurch gekennzeichnet, daß der Mikroprozessor selbst mit einem überschreibbaren Programmspeicher (EEPROM) verbunden ist.

4. Vorrichtung nach einem der Ansprüche 1 bis 3, dadurch gekennzeichnet, daß der für die jeweilige Regelaufgabe im EPROM vorgegebene Regelalgorithmus vor Ort über Parameter entsprechend den Versorgungsbedingungen optimiert werden kann.

5. Vorrichtung nach einem der Ansprüche 1 bis 4, dadurch gekennzeichnet, daß autonome Sicherheitssysteme mit Fehlercodeanzeigen vorgesehen sind, die über das Display (44) zur Anzeige gebracht werden können, wobei die Sicherheitssysteme vor Ort in ihrer Sensibilität über Parameter konfiguriert werden können.

6. Vorrichtung nach einem der Ansprüche 1 bis 5, dadurch gekennzeichnet, daß beim Einsatz zum Temperieren von Wasser in einem mit einer Umwälzpumpe versehenen Brauchwasserkreislauf, insbesondere Warmwasserversorgungsleitung mit mehreren Zapfstellen, eine Zirkulationsabschaltung vorgesehen ist, die eine Regelung der Mischwassertemperatur durch die Vorrichtung selbst solange unterbricht, solange die Mischwassertemperatur im Zirkulationsfall durch eine andere Einrichtung bestimmt wird.

7. Vorrichtung nach einem der Ansprüche 1 bis 6, dadurch gekennzeichnet, daß eine Zirkulationsabschaltung im Störfall vorgesehen ist.

8. Vorrichtung nach einem der Ansprüche 1 bis 7, da durch gekennzeichnet, daß eine Akkupufferung vorgesehen ist, derart, daß wenigstens im Störfall, z.B. Netzausfall, das Regelventil (1) in die Position der Absperrung des Warmwasseranschlusses (13) geführt ist.

9. Vorrichtung nach einem der Ansprüche 1 bis 7, dadurch gekennzeichnet, daß die Vorrichtung netzunabhängig über Akkuversorgung arbeitet.

10. Vorrichtung nach einem der Ansprüche 1 bis 9, dadurch gekennzeichnet, daß die Datenleitung (2) über Steckverbindungen (21) mit der Steuer- und Recheneinheit (CPU) (3) und einem Stellglied (16) des Regelventils (1) verbindbar ist und die Schalttafel (4) unmittelbar am Gehäuse der Steuer- und Recheneinheit (CPU) (3) ausgebildet ist.

11. Vorrichtung nach einem der Ansprüche 1 bis 10, dadurch gekennzeichnet, daß die Einstellung der gelvorrichtung über in der Schalttafel (4) angeordnete Drucktasten (410,411,412,420,421,430,431,432) erfolgt.

12. Vorrichtung nach einem der Ansprüche 1 bis 11, dadurch gekennzeichnet, daß auf der Schalttafel (4) unterhalb von dem Display (44) in einem ersten Tastenblock (41) eine PLUS-Eingabetaste (411), eine MINUS-Eingabetaste (412) und eine Einschalt- und Speichertaste (410) vorgesehen ist, dem wenigstens ein zweiter Tastenblock (42) mit einer REAL-Funktionstaste (420) und einer NOMINAL-Funktionstaste (421) zugeordnet ist, wobei in den Tasten je eine Leuchtdiode (45) integriert ist, die nach einer Aktivierung der Taste leuchtet, derart, daß
a) durch eine erste Betätigung der Einschalttaste (410) die Regelvorrichtung in Betrieb geht und nach erfolgreichem Abschluß der Selbsttestfunktionen die zugehörige Leuchtdiode (45) leuchtet und bei Stellbewegungen am Regelventil (1) in Richtung auf Absenkung der Mischtemperatur an der MINUS-Eingabetaste (412), in Richtung auf Erhöhung der Mischtemperatur an der PLUS-Eingabetaste (411) die Leuchtdiode (45) leuchtet, dagegen bei erkanntem Fehlerfall beide Leuchtdioden (45) blinken;
b) nach erfolgreicher Inbetriebnahme die REAL-Funktionstaste (420) zu betätigen ist, so daß die Regelvorrichtung nunmehr die Betriebsart "REAL", d.h. der Regelvorgang läuft ab, einnimmt und die zugehörige Leuchtdiode leuchtet, wobei das Display (44) die aktuelle Isttemperatur anzeigt;
c) nach erfolgreicher Inbetriebnahme die NOMINAL-Funktionstaste (421) betätigbar ist, worauf die Regelvorrichtung den Eingabemodus "NOMINAL" einnimmt und die aktuelle Sollwerttemperatur vom Display (44) gezeigt wird, wobei eine schrittweise Änderung mit der PLUS- (411) und der MINUS-Eingabetaste (412) möglich ist, und durch eine Betätigung der Einschalt- und Speichertaste (410) die angezeigte Solltemperatur gespeichert wird und die Regelvorrichtung in die Betriebsart "REAL" zurückkehrt.

13. Vorrichtung nach Anspruch 12, dadurch gekennzeichnet, daß neben dem ersten und zweiten Tastenblock (41,42) ein dritter Tastenblock (43) vorgesehen ist, der wenigstens eine PARAMETER-Funktionstaste (430) enthält und nach Aktivierung der Taste die Regelvorrichtung den Eingabemodus "PARAMETER" einnimmt, so daß hierauf die PARAMETER-Nummern vom Display (44) angezeigt werden, wobei durch Betätigung der PLUS-Eingabetaste (411) oder MINUS-Eingabetaste (412) eine Auswahl ermöglicht ist, worauf durch Betätigung der Einschalt- und Speichertaste (410) der PARAMETER-Wert erscheint, der mit Hilfe der PLUS- oder MINUS-Eingabetaste (411,412) schrittweise veränderbar ist; eine erneute Betätigung der Speichertaste (410) beendet und speichert die Eingabe; eine Betätigung der REAL-Funktionstaste (420) beendet die Funktionseingaben.

14. Vorrichtung nach Anspruch 12 oder 13, dadurch gekennzeichnet, daß im dritten Tastenblock (43) eine LOCAL-Funktionstaste (431) und eine REMOTE-Funktionstaste (432) angeordnet ist, wobei nach Betätigung der LOCAL-Funktionstaste (431) alle Tasten der Schalttafel (4) wirksam betätigt werden können, während bei der Betätigung der REMOTE-Funktionstaste (432) die Regelvorrichtung die Betriebsart "FERNSTEUERUNG" einnimmt und an der Schalttafel (4) lediglich die Isttemperatur oder durch Betätigung der NOMINAL-Funktionstaste (421) die Solltemperatur angezeigt wird.

15. Vorrichtung nach einem der Ansprüche 1 bis 14, dadurch gekennzeichnet, daß alle Funktionstasten gesperrt werden können und nur durch eine autorisierte Person über entsprechende Tastaturcodes die Sperrung aufgehoben werden kann.

16. Vorrichtung nach einem der Ansprüche 1 bis 15, dadurch gekennzeichnet, daß die im Eingabemodus NOMINAL wählbare Temperatur zum Zeitpunkt der Speicherung mit einem oberen Grenzwert, der über eine andere Eingaberoutine gewählt und verändert werden kann, verglichen und bei Überschreitung auf diesen beschränkt wird.

17. Vorrichtung nach einem der Ansprüche 1 bis 16, dadurch gekennzeichnet, daß der vollständig über die Schalttafel (4) durchführbare Eingabe- und Anzeigeumfang durch über Tastenbetätigung einleitbare Vergabe von Zugriffsberechtigungen eingeschränkt werden kann.

18. Vorrichtung nach einem der Ansprüche 1 bis 17, dadurch gekennzeichnet, daß die Einrichtung geräteintern einen Schaltkontakt aufweist, der über eine am Gerät angebrachte Steckerbuchse verfügbar gemacht wird und der über das Sicherheitssystem der Einrichtung automatisch geschaltet wird.

## Claims

1. Device for regulating and operating a mixed water preparation installation with cold and hot water inflows (12, 13) and also a mixed water outflow (14) and at least one regulating valve (1) which is arranged upstream of the mixing chamber and in which a valve slider is provided by which the cold and hot water inflows are controlled in opposite directions by an expansion material element acting as a mechanical proportional regulating means, and with which an electronic regulating device is associated, characterized in that as the electronic regulating device a digitally operating control and computing unit (CPU) (3) is provided which is connected by way of data lines (2) to the regulating valve (1) and an electrical control panel (4) with a display (44), wherein
- an easily exchangeable program memory is provided in which there are stored, in software form, computing rules for the control and computing unit (CPU) (3) which are specialized for a respective application,
- a safety system is provided which, in the event of failure of the cold water supply, prevents the drawing of water at temperatures which lead to scalding of the human skin.

2. Device according to Claim 1, characterized in that the control and computing unit (CPU) (3) is in the form of a single chip microprocessor with external data memory (RAM) and external extensive program memory (EPROM), one or more physical magnitudes being able to be detected by way of one or more sensors, the signals of which - converted into processor-specific digital forms - are fed to the microprocessor.

3. Device according to Claim 1 or 2, characterized in that the microprocessor itself is connected to an overwritable program memory (EEPROM).

4. Device according to one of Claims 1 to 3, characterized in that the regulating algorithm provided in the EPROM for the respective regulating task can be optimized in advance by way of parameters appropriate to the supply conditions.

5. Device according to one of Claims 1 to 4, characterized in that autonomous safety systems with error code indications are provided which can be indicated by way of the display (44), the safety systems being able to be configured in their sensitivity, in advance, by way of parameters.

6. Device according to one of Claims 1 to 5, characterized in that when being used for controlling the temperature of water in a service water circuit provided with a circulating pump, especially a hot water supply line with a plurality of tap points, a circulation shut-off is provided which interrupts regulation of the mixed water temperature by means of the device itself for as long as the mixed water temperature in circulation is determined by means of another arrangement.

7. Device according to one of Claims 1 to 6, characterized in that a circulation shut-off is provided in the case of an abnormal occurrence.

8. Device according to one of Claims 1 to 7, characterized in that a battery buffer action is provided such that, at least in the case of an abnormal occurrence, for example mains failure, the regulating valve (1) is brought into the position for shutting off the hot water connection (13).

9. Device according to one of Claims 1 to 7, characterized in that the device operates independently of the mains supply by way of a battery supply.

10. Device according to one of Claims 1 to 9, characterized in that the data line (2) is arranged to be connected by way of plug-in connections (21) to the control and computing unit (CPU) (3) and an adjusting member (16) of the regulating valve (1), and the electrical control panel (4) is formed directly on the housing of the control and computing unit (CPU) (3).

11. Device according to one of Claims 1 to 10, characterized in that the regulating device is set by way of push-buttons (410, 411, 412, 420, 421, 430, 431, 432) arranged in the electrical control panel (4).

12. Device according to one of Claims 1 to 11, characterized in that on the electrical control panel (4) beneath the display (44) in a first block of buttons (41) there are provided a PLUS input button (411), a MINUS input button (412) and a switch-on and store button (410) with which at least a second block of buttons (42) with a REAL function button (420) and a NOMINAL function button (421) is associated, there being incorporated in each of the buttons a light-emitting diode (45) which lights up after the button is actuated, such that
a) by means of a first actuation of the switch-on button (410) the regulating device is set in operation and after successful completion of the self-test functions the corresponding light-emitting diode (45) lights up and, during adjusting movements at the regulating valve (1) in the direction of lowering of the mixing temperature the light-emitting diode (45) lights up at the MINUS input button (412), and, in the direction of raising of the mixing temperature, at the PLUS input button (411), but in the case of a recognized fault both light-emitting diodes (45) flash;
b) after successful setting in operation the REAL function button (420) is to be actuated so that the regulating device now assumes the "REAL" operating mode, that is to say, the regulating operation takes place, and the corresponding light-emitting diode lights up, the display (44) indicating the current actual temperature;
c) after successful setting in operation, the NOMINAL function button (421) is arranged to be actuated, whereupon the regulating device assumes the "NOMINAL" input mode and the current desired temperature is indicated by the display (44), a step-by-step alteration being possible with the PLUS input button (411) and MINUS input button (412), and by means of actuation of the switch-on and store button (410) the indicated desired temperature is stored and the regulating device returns to the "REAL" operating mode.

13. Device according to Claim 12, characterized in that in addition to the first and second block of buttons (41, 42) a third block of buttons (43) is provided which contains at least one PARAMETER function button (430) and after actuation of the button the regulating device assumes the "PARAMETER" input mode, so that the PARAMETER numbers are thereupon indicated by the display (44), a selection being made possible by means of actuation of the PLUS input button (411) or MINUS input button (412), whereupon, by actuation of the switch-on and store button (410), the PARAMETER value appears which is arranged to be altered step-by-step by means of the PLUS or MINUS input button (411, 412); renewed actuation of the store button (410) ends and stores the input; actuation of the REAL function button (420) ends the function inputs.

14. Device according to Claim 12 or 13, characterized in that in the third block of buttons (43) a LOCAL function button (431) and a REMOTE function button (432) are arranged, it being possible, after actuation of the LOCAL function button (431), for all the buttons of the electrical control panel (4) to be actuated so as to be effective, whereas if the REMOTE function button (432) is actuated the regulating device assumes the "REMOTE CONTROL" operating mode and on the electrical control panel (4) only the actual temperature or, by actuation of the NOMINAL function button (421), the desired temperature, is indicated.

15. Device according to one of Claims 1 to 14, characterized in that all the function buttons can be disabled and the disablement can be eliminated only by an authorized person by way of corresponding keyboard codes.

16. Device according to one of Claims 1 to 15, characterized in that the temperature that can be selected in the NOMINAL input mode is compared, at the moment of storage, with an upper limit value which can be selected and altered by way of another input routine, and when the upper limit value is exceeded is limited to the latter.

17. Device according to one of Claims 1 to 16, characterized in that the input and indicating range that can be carried out completely by way of the electrical control panel (4) can be restricted by means of allocation of access permissions that can be introduced by operation of buttons.

18. Device according to one of Claims 1 to 17, characterized in that the arrangement has, built in to the apparatus, a switching contact which is made available by way of a connector socket mounted on the apparatus and which is switched automatically by way of the safety system of the arrangement.

## Revendications

1. Dispositif pour réguler et commander une installation de préparation d'eaux mélangées muni d'une arrivée d'eau froide et d'eau chaude (12, 13) ainsi que d'une sortie d'eaux mélangées (14) et au moins une vanne de régulation (1) en amont de la chambre de mélange, cette vanne étant équipée d'un tiroir qui commande l'arrivée d'eau froide et d'eau chaude de façon opposée à partir d'un élément dilatable fonctionnant comme un régulateur mécanique proportionnel, et auquel est associée une installation de régulation électronique,
caractérisé en ce que
l'installation de régulation électronique comporte une unité de commande et de calcul (CPU) (3), à fonctionnement numérique, reliée par des lignes de données (2) à la vanne de régulation (1) et par un tableau de commutation (4) à un dispositif d'affichage (44),
- une mémoire de programme facilement interchangeable étant prévue qui enregistre les prescriptions de calcul en forme de programmes pour l'unité de commande et de calcul (CPU) (3) qui sont spécialisées pour une application respective,
- un système de sécurité qui évite qu'en cas de défaillance de l'alimentation en eau froide on arrive à des températures d'eau d'alimentation risquant de provoquer des brûlures intenses.

2. Dispositif selon la revendication 1,
caractérisé en ce que
l'unité de commande et de calcul (CPU) (3) est un microprocesseur sur une puce avec une mémoire de données, externe (RAM) et des mémoires de programmes compliqués externes (EPROM), une ou plusieurs grandeurs physiques étant détectées par l'intermédiaire d'un ou plusieurs capteurs dont les signaux transformés sous forme numérique spécifique au processeur sont appliqués à ce microprocesseur.

3. Dispositif selon la revendication 1 ou 2,
caractérisé en ce que
le microprocesseur lui-même est relié à une mémoire programmable enregistrable (EEPROM).

4. Dispositif selon l'une des revendications 1 à 3,
caractérisé en ce que
l'algorithme de régulation, prévu pour le travail de régulation respectif dans la mémoire EPROM, est optimisé par le lieu supérieur au paramètre en fonction des conditions d'alimentation optimales.

5. Dispositif selon l'une des revendications 1 à 4,
caractérisé en ce que
des systèmes de sécurité autonomes sont prévus avec affichage de codes d'erreurs qui peuvent être affichés par l'intermédiaire d'un moyen d'affichage (44), les systèmes de sécurité pouvant être configurés préalablement, en sensibilité, par des paramètres.

6. Dispositif selon l'une des revendications 1 à 5,
caractérisé en ce que
lorsqu'il est utilisé pour mettre en température de l'eau dans un circuit d'eau de douche équipé d'une pompe de circulation, notamment d'une conduite d'alimentation en eau chaude à plusieurs points de distribution, il est prévu une coupure de circulation interdisant la régulation de la température de l'eau mélangée par le dispositif lui-même aussi longtemps que la température de l'eau mélangée, dans le cas d'une mise en circulation, est définie par une autre installation.

7. Dispositif selon l'une des revendications 1 à 6,
caractérisé par
une coupure de la circulation en cas d'incident.

8. Dispositif selon l'une des revendications 1 à 7,
caractérisé par
un accumulateur tampon de façon qu'au moins en cas d'incident, par exemple de coupure de réseau, la vanne de régulation (1) passe dans la position de la fermeture de la vanne d'eau chaude (13).

9. Dispositif selon l'une des revendications 1 à 7,
caractérisé en ce qu'
il travaille indépendamment du réseau en étant alimenté par un accumulateur.

10. Dispositif selon l'une des revendications 1 à 9,
caractérisé en ce que
la ligne de donnée (2) est reliée par des connexion par fiche (21) à l'unité de commande et de calcul (CPU) (3) et peut être reliée à un organe de réglage (16) de la vanne de régulation (1) et le tableau de commande (4) est réalisé directement sur le boîtier de l'unité de commande et de calcul (CPU) (3) .

11. Dispositif selon l'une des revendications 1 à 10,
caractérisé en ce que
le réglage du dispositif de régulation se fait par les touches (410, 411, 412, 420, 421, 430, 431, 432) prévues dans le tableau de commande (4).

12. Dispositif selon l'une des revendications 1 à 11,
caractérisé en ce que
le tableau de commande (4) comporte, en dessous de l'affichage (44), dans un premier bloc de touches (41), une touche d'entrée PLUS (411), une touche d'entrée MOINS (412) et une touche de branchement et de mise en mémoire (410), ainsi qu'au moins un second bloc de touches (42) ayant une touche de fonctionnement REEL (420) et une touche de fonction NOMINAL (421), une diode électroluminescente (45) étant intégrée à chacune des touches, qui s'éclaire après une activation des touches et
a) par une première commande de la touche de branchement (410) on met en route le dispositif de régulation puis après une coupure réussie des fonctions de test automatique, la diode électroluminescente (45) correspondante s'éclaire et pour des mouvements de réglage sur la vanne de régulation (1) dans le sens d'un abaissement de la température de mélange sur la touche d'entrée MOINS (412) dans la direction de l'augmentation de la température de mélange, au niveau de la touche d'entrée PLUS (411), la diode luminescente (45) s'éclaire alors qu'en cas de défaut reconnu les deux diodes électroluminescentes (45) clignotent,
b) après une mise en route réussie il faut actionner la touche de fonctionnement REEL (420) pour que le dispositif de régulation déroule le mode de fonctionnement « REEL », c'est-à-dire l'opération de régulation et la diode électroluminescente correspondante s'éclaire, le dispositif d'affichage (44) indiquant la température réelle instantanée ;
c) après la mise en route réussie, on actionne la touche de fonction NOMINAL (421) puis le dispositif de régulation passe en mode d'entrée « NOMINAL » et la température de consigne, instantanée, est affichée par l'afficheur (44), une variation pas à pas avec la touche d'entrée PLUS (411) et MOINS (412) est possible et par un actionnement de la touche de branchement et de mémoire (410) on enregistre la température de consigne affichée et le dispositif de régulation revient au mode de fonctionnement « REEL ».

13. Dispositif selon la revendication 12,
caractérisé en ce qu'
il est prévu un troisième bloc de touches (43) en plus du premier et du second bloc de touches (41, 42), ce bloc ayant au moins une touche de fonction PARAMETRE (430) et après activation de la touche, le dispositif de régulation passe en mode d'entrée « PARAMETRE » pour que les numéros PARAMETRE soient affichés par l'afficheur (44) et par l'actionnement de la touche d'entrée PLUS (411) ou de la touche d'entrée MOINS (412) une sélection est possible puis par actionnement de la touche de branchement et de mémoire (410) apparaît la valeur PARAMETRE qui peut être modifiée pas à pas par la touche d'entrée PLUS ou MOINS (411, 412) ; une nouvelle commande de la touche de mémoire (410) se termine et enregistre l'entrée ; un actionnement de la touche de fonction REEL (420) termine les entrées de fonction.

14. Dispositif selon la revendication 12 ou 13,
caractérisé en ce que
dans le troisième bloc de touches (43) se trouve une touche de fonction LOCAL (431) et une touche de fonction TELECOM-MANDE (432), et après actionnement de la touche de fonction LOCAL (431), toutes les touches du tableau de commande (4) peuvent être actionnées efficacement alors qu'en actionnant la touche de fonction TELECOMMANDE (432), le dispositif de régulation passe en mode de « TELECOMMANDE » et le tableau de commande (4) affiche seulement la température réelle ou par actionnement de la touche de fonction NOMINAL (421), la température de consigne est affichée.

15. Dispositif selon l'une des revendications 1 à 14, caractérisé en ce que
l'on peut bloquer toutes les touches de fonction pour que seule une personne autorisée puisse libérer le blocage par un code de clavier correspondant.

16. Dispositif selon l'une des revendications 1 à 15,
caractérisé en ce que
la température, susceptible d'être sélectionnée en mode d'entrée NOMINAL, à l'instant de la mise en mémoire avec une valeur limite supérieure, qui peut être choisie et modifiée par un autre programme d'entrée, est alors comparée et elle est limitée à cette valeur en cas de dépassement.

17. Dispositif selon l'une des revendications 1 à 16,
caractérisé en ce que
tout le volume d'entrée d'affichage exécuté par le tableau de commande (4) peut être limité par l'attribution d'autorisation d'accès réalisée par l'actionnement des touches.

18. Dispositif selon l'une des revendications 1 à 17,
caractérisé en ce que
l'installation comporte, à l'intérieur de l'appareil, un contact de commutation rendu disponible par une prise portée par l'appareil et commutant automatiquement l'installation par le système de sécurité.
